(19) Europäisches Patentamt

European Patent Office

Office européen des brevets

(11) **EP 1 659 519 A2**

(12) **EUROPEAN PATENT APPLICATION**

(43) Date of publication:
**24.05.2006 Bulletin 2006/21**

(51) Int Cl.:
***G06K 9/00*** (2006.01)

(21) Application number: **05255559.6**

(22) Date of filing: **09.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **22.11.2004 KR 2004095903**

(71) Applicant: **Samsung Electronics Co., Ltd.**
**Suwon-si, Gyeonggi-Do (KR)**

(72) Inventors:
• **Jung, Cheolkon**
 **Suwon-si**
 **Gyeonggi-do (KR)**
• **Kim, Jiyeun**
 **Songpa-gu**
 **Seoul (KR)**

• **Kim, Sangkyun**
 **Bojeong**
 **Guseong-eub**
 **Yongin-si**
 **Gyeongi-do (KR)**
• **Lee, Gwanggook**
 **Seoul (KR)**
• **Kim, Whoiyul**
 **Seongdong-gu**
 **Seoul (KR)**
• **Hwang, Sunkyoo**
 **Anyang-si**
 **Gyeonggi-do (KR)**

(74) Representative: **Greene, Simon Kenneth**
 **Elkington and Fife LLP,**
 **Prospect House,**
 **8 Pembroke Road**
 **Sevenoaks,**
 **Kent TN13 1XR (GB)**

(54) **Method and apparatus for summarizing sports moving picture**

(57)    A method and apparatus for summarizing a sports moving picture based on audio and image data contained in the moving picture of sports such as a football game are provided. The method includes: segmenting the sports moving picture into shots and extracting audio and image data of the segmented shots; calculating a level of importance for each of the shots based on the extracted audio and image data; and selecting important shots of the shots based on the calculated levels of importance of the shots and summarizing the moving picture based on the selected important shots. Accordingly, the sports moving picture are summarized by calculating levels of importance of shots in the sports moving picture based on extracted audio and image data and selecting important shots based on the calculated levels of importance, so that reliability of the summarized sports moving picture can increase and a user can generate a desired length of summarized sports moving picture.

FIG. 1

**Description**

The present invention relates to a method of and apparatus for summarizing a sports moving picture, and more particularly, to a method and apparatus for summarizing a sports moving picture based on audio and image data contained in the moving picture.

In general, an image reproduction apparatus such as a personal video recorder (PVR) has a main function of reproducing a moving picture stored in a storage device on a display screen. In addition, the image reproduction apparatus has an additional function of decoding encrypted image data and outputting the decoded image data. Recently, as techniques for networking, digital data storage devices, image compressing, and image recovering have been greatly developed, the image reproduction apparatuses for reproducing digital images stored in the storage devices have been widely popularized.

In general, a long time, for example, about two hours, is taken to reproduce a moving picture of sports such as a football game. Therefore, there is a need for a function of easily and promptly retrieving, editing, and reproducing only the interesting scenes such as goal and shooting scenes. Such a function is called "moving picture summarizing."

In a conventional moving picture summarizing method, events such as an attack, a fast break attack, and shooting are detected based on information on color, motion, audio, or the like extracted from a sports moving picture, and then, the moving picture is summarized based on important ones of the detected events. In another conventional moving picture summarizing method, a sports moving picture is segmented into play and non-play shots, and then, the moving picture is summarized by joining only the play shots.

However, in the conventional moving picture summarizing methods, unimportant scenes are inserted into the summarized moving picture, so that reliability of the summarized moving picture may decrease. In addition, the moving picture is not effectively summarized, so that the length of the summarized moving picture may be much longer than a desired length thereof.

An aspect of the present invention provides a method and apparatus for summarizing a sports moving picture based on audio and image data extracted from the sports moving picture.

According to an aspect of the present invention, there is provided a method of summarizing a sports moving picture, including: segmenting the sports moving picture into shots and extracting audio and image data of the segmented shots; calculating a level of importance for each of the shots based on the extracted audio and image data; and selecting important shots of the shots based on the calculated levels of importance of the shots and summarizing the sports moving picture based on the selected important shot.

The calculating of the levels of importance may include: detecting events which occur in each of the shots based on the extracted audio and image data; and calculating the level of importance of the shot based on the detected events of the shots.

The events may include at least one of cheering, whistle, important area, and replay events. In addition, in a case where the sports moving picture is of a football game, hokey, a handball game, or the like, the important area may be the penalty area.

The cheering event may be detected from a shot if an STE (short time energy) of extracted audio data of the shot is more than a specified value. The whistle event may be detected from a shot if a ZCR (zero crossing rate) of extracted audio data of the shot is more than a specified value.

The penalty area may be detected by performing: extracting a long view from views of the shot; extracting white regions from the extracted long view; extracting straight-line regions from the extracted white regions; and detecting the penalty area based on the extracted straight-line regions.

The extracting of the long view may be performed by extracting an image of which field color has an occupation ratio more than a specified value as the long view. The extracting of the white regions may be performed by extracting from the extracted long views a region of which brightness is more than a specified multiple of an average brightness of the extracted long view.

The detecting of the penalty area may be performed by detecting the penalty area from the extracted straight-line regions based on slopes of the extracted straight lines.

The replay event may be detected if a ZCR of a brightness difference between continuous images of the shot is more than a specified value. The replay event may be detected from the shots which follow in a specified time after a specified event occurs.

The level of importance of the shot may be calculated based on weighting factors allocated to the detected events of the shot. The weighting factors may be allocated to the events by a user.

The important shots may be selected so that a sum of playing times of the important shots is shorter than a summarizing time input by a user.

According to another aspect of the present invention, there is provided a method of summarizing a sports moving picture, including: detecting a field color from the sports moving picture; segmenting the sports moving picture into shots and extracting audio and image data of the segmented shots; detecting audio events of the shots based on the extracted audio data and detecting visual events of the shots based on the detected field color and the extracted image data; calculating a level of importance for each of the shots based on the detected audio and visual events; and summarizing the sports moving picture based on the calculated levels of importance of the shots.

The detecting of the field color may include: obtaining color distributions of pixels of images of the sports moving picture for a specified time; detecting a dominant color in which a largest number pixels are distributed based on the obtained color distributions; and determining adjacent colors in a specified range at a center of the detected dominant color as the field color.

The color distributions may be YUV distributions of the pixels of the images. The field color may be updated every specified time. The field color may be updated every time when a ratio of pixels having the field color to the entire pixels of the image of the sports moving picture is more than a specified value.

According to another aspect of the present invention, there is provided a sports moving picture summarizing apparatus including: a data extraction unit segmenting the sports moving picture into shots and extracting audio and image data of the segmented shots; an event detection unit detecting events of the shots based on the extracted audio and image data; a level-of-importance calculation unit calculating a level of importance of the shots based on a level of importance for each of the shots; and a summarizing unit selecting important shots of the shots based on the calculated levels of importance of the shots and summarizing the sports moving picture by joining the selected important shots.

The events may include at least one of cheering, whistle, important area, and replay events. In addition, in a case where the sports moving picture is of a football game, hokey, a handball game, or the like, the important area may be the penalty area.

The cheering event may be detected from a shot if an STE (short time energy) of extracted audio data of the shot is more than a specified value. The whistle event may be detected from a shot if a ZCR (zero crossing rate) of extracted audio data of the shot is more than a specified value.

The event detection unit may include: a long view extraction unit extracting a long view from views of the shot; a white region extraction unit extracting white regions from the extracted long view; a straight-line region extraction unit extracting straight-line regions from the extracted white regions; and a penalty area detection unit detecting the penalty area based on the extracted straight-line regions.

The replay event may be detected if a ZCR of a brightness difference between continuous images of the extracted shots is more than a specified value. The replay event may be detected from shots which follow in a specified time after a specified event occurs.

The level-of-importance calculation unit may calculate the levels of importance of the shots based on weighting factors allocated to the detected events of the shots. The weighting factors may be allocated to the events by a user.

The important shots may be selected so that a sum of playing times of the important shots is shorter than a summarizing time input by a user.

The sports moving picture summarizing apparatus may further include a field color detection unit detecting a field color from the sports moving picture. The field color detection unit may include: a color distribution calculation unit obtaining color distributions of pixels of images of the sports moving picture for a specified time; a dominant color detection unit detecting a dominant color in which a largest number of pixels are distributed based on the obtained color distributions; and a field color determination unit determining adjacent colors in a specified range at a center of the detected dominant color as the field color.

The color distributions may be YUV distributions of the pixels of the image. The field color may be updated every specified time. The field color may be updated every time when a ratio of pixels having the field color to the entire pixels of the image of the sports moving picture is more than a specified value.

According to other aspects of the present invention, there are provided computer-readable storage media encoded with processing instructions for causing a processor to perform the aforementioned methods.

According to another aspect of the present invention, there is provided an apparatus including: a data extractor segmenting a moving picture into shots and extracting audio data and image data from the segmented shots; an event detector detecting events occurring in the shots based on the extracted audio and image data; a level-of-importance calculator calculating a level of importance for each of the shots based on the detected events; and a summarizer selecting at least one of the shots based on the calculated levels and summarizing the moving picture based on the at least one selected shot.

Additional and/or other aspects and advantages of the present invention will be set forth in part in the description which follows and, in part, will be obvious from the description, or may be learned by practice of the invention.

The above and/or other aspects and advantages of the present invention will become apparent and more readily appreciated from the following detailed description, taken in conjunction with the accompanying drawings of which:

FIG. 1 is a block diagram showing a construction of a sports moving picture summarizing apparatus according to an embodiment of the present invention;
FIG. 2 is a detailed block diagram showing an example of a field color detection unit of FIG. 1;

FIGS. 3A-3C show images for explaining an operation of adjusting a view size to detect a field color;

FIG. 4 is a histogram showing a color distribution for explaining an operation of detecting a dominant color to detect a field color;

FIGS. 5A-5D show images obtained by extracting regions having the field colors from the sports moving picture;

FIG. 6 is a detailed block diagram showing an example of an event detection unit of FIG. 1;

FIGS. 7A - 7F show images for explaining field color distributions of long, medium, and close up views;

FIGS. 8A-8B show images for explaining an operation of detecting a penalty area from a sports moving picture based on extracted straight-line regions;

FIGS. 9A-9B show graphs for explaining an operation of detecting a replay event from a sports moving picture;

FIG. 10 is a view of a window showing a summarized sports moving picture;

FIG. 11 is a method of summarizing a sports moving picture according to an embodiment of the present invention;

FIG. 12 is a detailed flowchart showing an example of an operation of detecting a field color of FIG. 12; and

FIG. 13 is a detailed flowchart showing an example of an operation of detecting a penalty area from a sports moving picture.

Reference will now be made in detail to embodiments of the present invention, examples of which are illustrated in the accompanying drawings, wherein like reference numerals refer to the like elements throughout. The embodiments are described below in order to explain the present invention by referring to the figures.

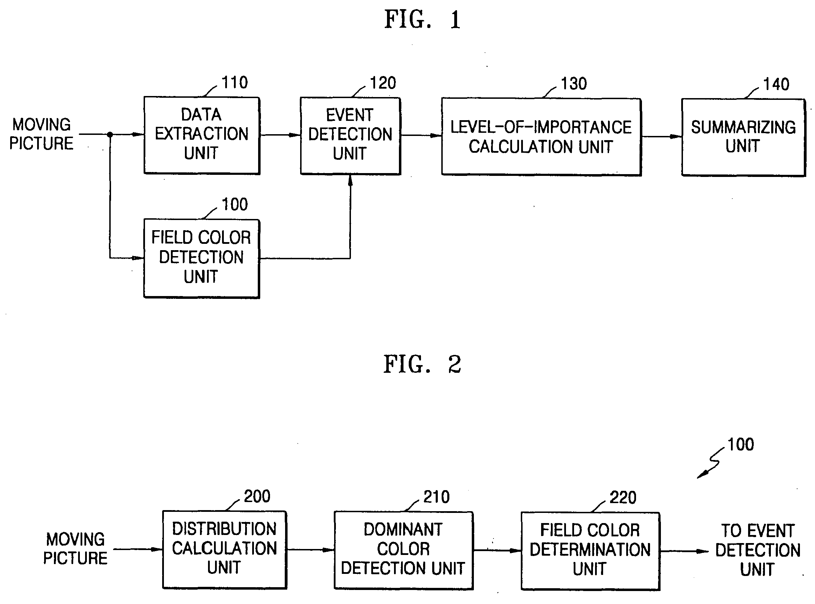

FIG. 1 is a block diagram showing a construction of a sports moving picture summarizing apparatus according to an embodiment of the present invention. The sports moving picture summarizing apparatus includes a field color detection unit 100, a data extraction unit 110, an event detection unit 120, a level-of-importance calculation unit 130, and a summarizing unit 140.

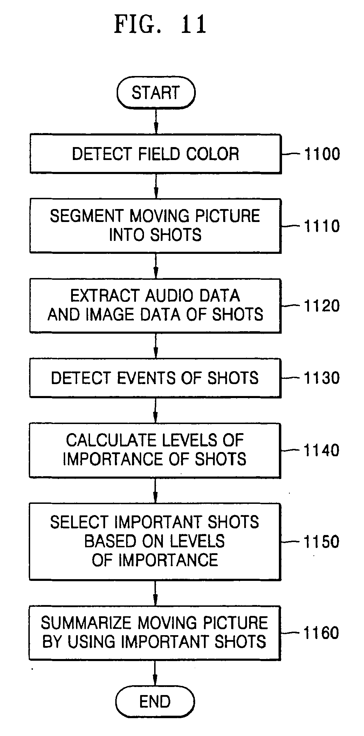

The operations of the sports moving picture summarizing apparatus of FIG. 1 will be described with reference to FIG. 11, which illustrates a flowchart showing the method of summarizing the sports moving picture. However, while the apparatus of FIG. 1 can perform the method of FIG. 11. and vice-versa, it is to be understood that this choice is made for ease of explanation only. It is contemplated that apparatuses of other configurations can perform the method of FIG. 11 and that other methods can be performed by the apparatus of FIG. 1.

The field color detection unit 100 analyzes a received sports moving picture to detect a field color of a field where a sports game is playing (operation 1100). In operation 1100, instead of detecting the field color based on the field color detection unit 100, a user may input the field color. Alternatively, a field color data attached to the sports moving picture may be used to detect the field color.

The field color detection unit 100 segments the received sports moving picture into shots, that is, images showing the same scene (operation 1110). Next, audio data is extracted from the sports moving picture, so that the audio and image data of the segmented shots is extracted (operation 1120).

The event detection unit 120 detects events of the shots based on the extracted audio and image data of the shots (operation 1130). The visual events detected from the image data include an important area scene event and a replay event. The important area scene event includes, for example, penalty area scene events, central area scene events, and the like, in case of a football game, hockey, a handball game, or the like. The audio events detected from the audio data include a cheering event, a whistle event, and the like. In addition, it is preferable that a function of defining desired events be provided to a user.

The level-of-importance calculation unit 130 receives the event data of the shots input from the event detection unit 120 and calculates levels of importance of the shots based on the events (operation 1140). The levels of importance of the shots may be calculated based on weighting factors allocated to the events. When a cheering event and a penalty area scene event are detected at a first shot, if the weighting factors of 2 and 10 are allocated to the cheering and penalty area scene events, respectively, the level of importance of the first shot becomes 12.

The weighting factors may be allocated to the events in advance by taking into consideration the levels of importance of the events. Alternatively, the user may allocate the weighting factors to the events or modify the pre-allocated weighting factors. For example, if the user desires to watch only penalty scenes in a moving picture of a football game, an arbitrary weighting factor is allocated to only the whistle event, and the weighting factor of 0 is allocated to the remaining events.

The summarizing unit 140 receives the levels of importance of the shots input from the level-of-importance calculation unit 130, selects important shots based on the levels of importance of the shots (operation 1150), and summarizes the sports moving picture based on the selected shots (operation 1160). In operation 1150, in a case where the user inputs an extracted audio and image data ed length (time) of the summarized moving picture, the important shots are selected so that a sum of playing times of the important shots is shorter than the desired length (time) of the summarized moving picture input by the user. For example, when the user desires to summarize a football game moving picture having 200 segmented shots into a summarized moving picture having a length of 1 minute, if the sum of replay times of the highest 20 important shots is 58 seconds and the sum of the replay times of the highest 21 important shots is 1 minute and 5 seconds, the highest 20 important shots are selected as the aforementioned important shots. The selected important shots are coupled in a time sequence to generate a summarized moving picture.

FIG. 2 is a detailed block diagram showing an example of the field color detection unit 100 of FIG. 1. The field color detection unit 100 includes a color distribution calculation unit 200, a dominant color detection unit 210, and a field color determination unit 220.

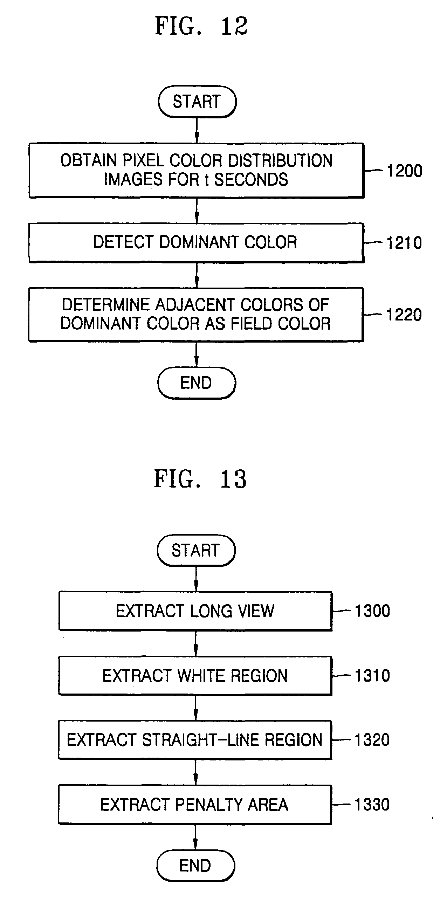

The operation of the field color detection unit 100 of FIG. 2 will be described with reference to FIG. 12, which illustrates a flowchart showing the operation of detecting the field color. However, while the unit of FIG. 2 can perform the operations of FIG. 12. and vice-versa, it is to be understood that this choice is made for ease of explanation only. It is contemplated that other units of other configurations can perform the operations of FIG. 11 and that other operations can be performed by the unit of FIG. 2.

The color distribution calculation unit 200 integrates colors of all pixels belonging to continuous images of the sports moving picture for a specified time t to obtain the color distribution of the pixels (operation 1200). The color distribution is a YUV color distribution.

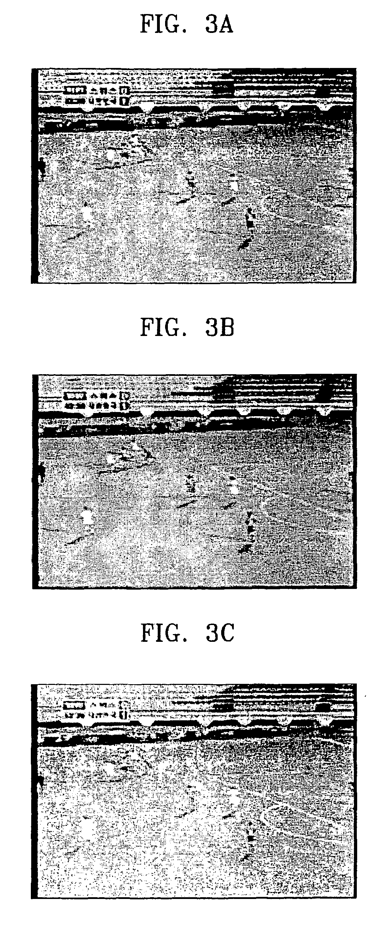

In order to reduction calculation data amount and time taken to detect the field color, before the color distribution is obtained in the color distribution calculation unit 200, the view sizes of the images are reduced. FIG. 3 shows images for explaining an operation of adjusting the view size of the images, wherein the view size is reduced by replacing 4 adjacent pixels with 1 pixel. In FIG. 3A, the view size is reduced by replacing the 4 adjacent pixels with the first pixel. In FIG. 3B, the view size is reduced by replacing the 4 adjacent pixels with a pixel having an average value of the values of the 4 pixels. In FIG. 3C, the view size is reduced by replacing the 4 adjacent pixels with a pixel having a highest value of brightness of the 4 pixels. It can be seen that the white boundary line in the image of FIG. 3C is more distinct than those of FIGS. 3A and 3B. Therefore, in order to distinctly represent the white boundary line used for determining positions of the field, the view size of the image is based on the method of FIG. 3C.

The dominant color detection unit 210 receives the information of the color distribution of the pixels input from the color distribution calculation unit 200 and detects a dominant color, that is, a color of a pixel having a largest color distribution (operation 1210). The field color determination unit 220 determines adjacent colors in a specified range at a center of the detected dominant color as the field colors (operation 1220).

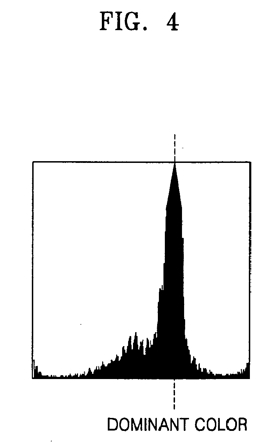

FIG. 4 is a histogram showing a color distribution for explaining an operation of detecting a dominant color to detect a field color from the color distribution. In the histogram shown in FIG. 4, a color having the highest distribution is determined to be the dominant color, and the adjacent colors in a specified range at a center of the dominant color is determined to be the field colors.

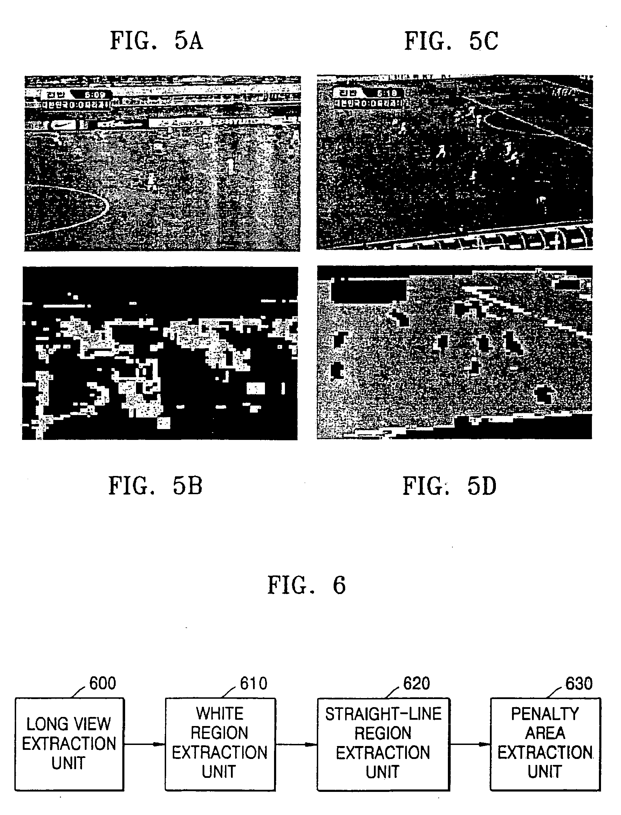

FIG. 5 shows images obtained by extracting regions (field color regions) having the field colors from the sports moving picture. The field color of the field in the same sports moving picture may change depending on weather, time, illumination of the field, or the like. Therefore, if the field regions of the sports moving picture are extracted based on the one detected field color, the detection error may occur. FIG. 5B is an image obtained by extracting field regions from the image of FIG. 5A. Referring to the images, it can be understood that the field regions are not accurately extracted for the aforementioned reasons.

In order to detect the field colors depending on weather, time, and illumination of the field, the field colors is updated by repeatedly performing the aforementioned operations of FIG. 12 in a specified time period. Alternatively, in a case where an occupation ratio of an extracted field region to the entire image is more than a specified ratio, the field colors is also updated by performing the aforementioned operations of FIG. 12. FIG. 5D shows an image obtained by extracting a field region based on the updated field color.

Now, an operation of detecting events from the audio and image data by the event detection unit 120 will be described in detail.

FIG. 6 is a detailed block diagram showing an example of the event detection unit 120. As an example, the event detection unit 120 may detect a penalty area event. The event detection unit 120 includes a long view extraction unit 600, a white region extraction unit 610, a straight-line region extraction unit 620, and a penalty area detection unit 630.

The operations of the event detection unit 120 of FIG. 6 will be described with reference to FIG. 13, which illustrates a flowchart showing an operation of detecting the penalty area. However, while the unit of FIG. 6 can perform the operations of FIG. 13. and vice-versa, it is to be understood that this choice is made for ease of explanation only. It is contemplated that other units of other configurations can perform the operations of FIG. 13 and that other operations can be performed by the unit of FIG. 6.

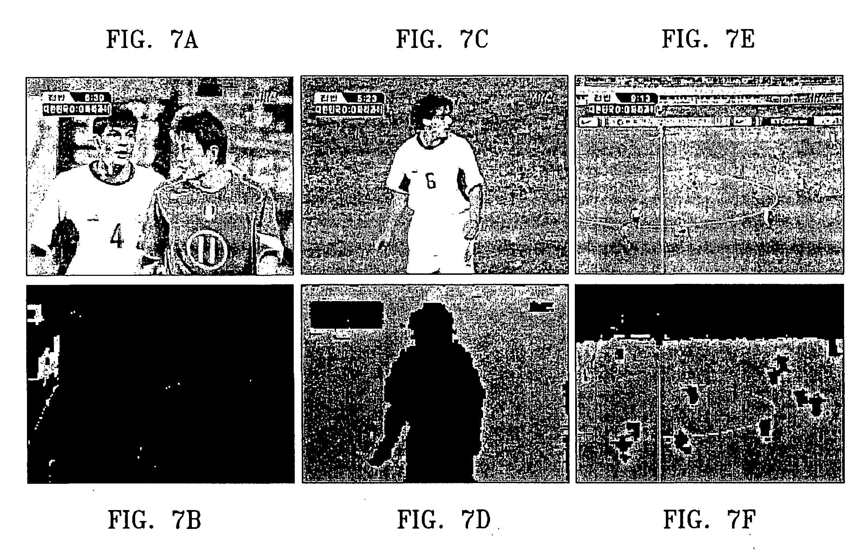

The long view extraction unit 600 extracts a long view from views of the shots (operation 1310). FIG. 7 shows images for explaining field color distributions according a picture-taking distance. More specifically, FIG. 7B shows a field region detected from a close up view shown in FIG. 7A; FIG. 7C shows a field region detected from a medium view shown in FIG. 7D; and FIG. 7F shows a field region detected from a long view. It can be seen that the field region shown in FIG. 7F is wider than those shown in FIGS. 7B and 7D. As a result, the field color regions of images of the shots are detected, and then, the images of which an occupation ratio of detected field color regions are more than a specified ratio are extracted as the long views.

The white region extraction unit 610 extracts white regions from the extracted long views (operation 1130). In the white region extraction unit 610, the white regions are obtained by extracting regions (pixels), each of which brightness is more than a specified multiple of an average brightness of the extracted long views. For example, the white regions are extracted by the pixels, each of which brightness is more than 1.2 times the average brightness of the extracted long views.

The straight-line region extraction unit 620 extracts straight-line regions from the extracted white regions (operation 1320). The straight-line region extraction unit 620 extracts the straight-line regions based on a Hough transformation scheme. In the Hough transformation scheme, a set of points, of which two points constitute a straight line having a slope larger than a specified value, is extracted as a straight-line region.

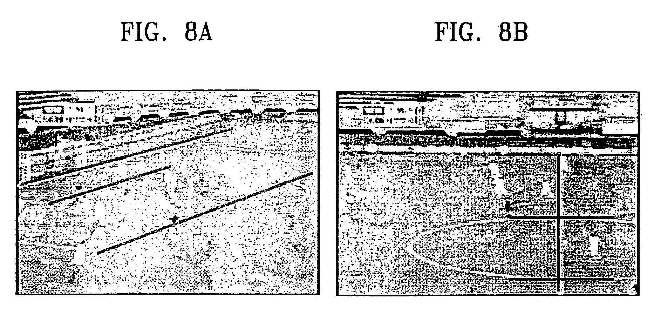

The penalty area detection unit 630 detects the penalty area based on the extracted straight-line regions (operation 1130). FIGS. 8A and 8B show image for explaining an operation of detecting the penalty area from a sports moving picture based on the extracted straight-line regions. FIG. 8A shows straight-line regions in the penalty area; and FIG. 8B shows straight-line regions in the central area. As shown in FIGS. 8A and 8B, since the slopes of the straight-line regions of the penalty area are different from those in the central area, the penalty area and the central area can be distinguished from each other based on the slopes of the extracted straight-line regions.

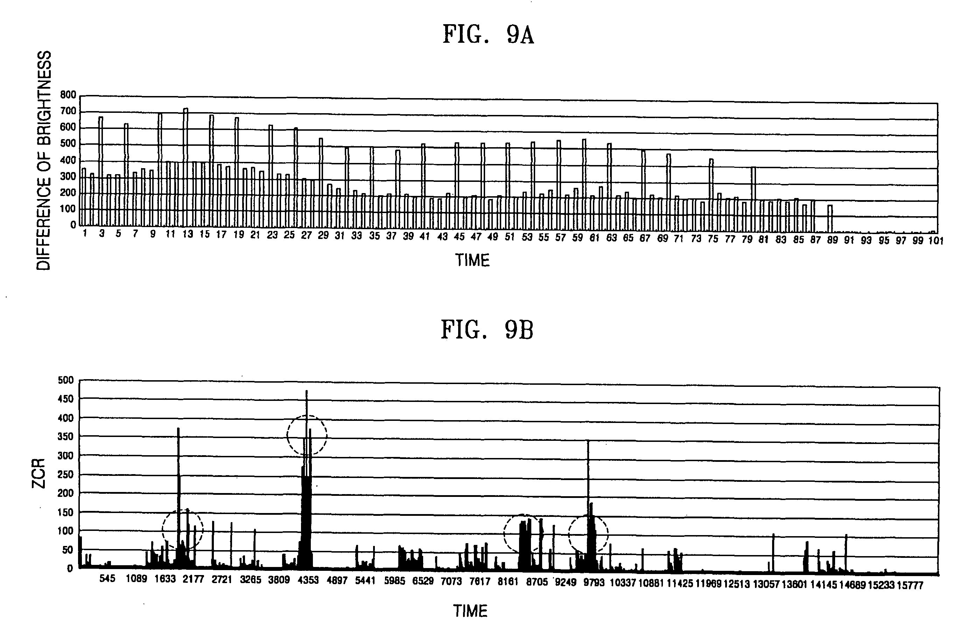

FIGS. 9A and 9B show graphs for explaining an operation of detecting a replay event from a sports moving picture. In general, replay images are generated by copying an original image and slightly modifying the copied image to extend a replay time of the image. Therefore, there is very small difference between data values of a specified number of consecutive images in the replay image, that is, between the images modified from the original image. FIG. 9A is a graph showing a brightness difference between consecutive images in the replay image. The brightness differences between consecutive images in the replay image give a ripple effect for the aforementioned reasons.

FIG. 9B is a graph showing a zero crossing rate (ZCR) of the brightness differences between the consecutive images of FIG. 9A. The ZCR indicates the number of intersections where a signal intersects a zero axis in an analyzing range, that is, the number of changes in sign of signal values. Therefore, the ZCR is a function of frequency. The higher the frequency is, the lager the value of the ZCR is. As shown in FIG. 9B, the ZCR of the brightness differences between the consecutive images is much larger than that of other images.

In the event detection unit 120, the ZCRs of the brightness differences between the consecutive images belonging to the shots are obtained, and if the ZCRs are more that a specified value, it is determined that the replay events occur in the associated shots. The ZCR can be calculated by using Equation 1.

[Equation 1]

$$Z_c(t, \theta_k) = \sum_{i=1}^{L-1} f(D(t-i) - \bar{D}(t), \ D(t-i-1) - \bar{D}(t), \ \theta_k)$$

$$f(x, y, \theta) = \begin{cases} 1 & x \geq \theta \ and \ y \leq -\theta \ or \\ & x \leq -\theta \ and \ y \geq \theta \\ 0 & otherwise \end{cases}$$

Here, $Z_c$, t, $\theta$, L, D, and f denote a ZCR, a time, a specified threshold value, a length of a normalized window of each of the images, an intensity difference between the images, and the number of repeating images, respectively. In the event detection unit 120, it is determined whether the replay events occur in a specified time, for example, in 2 minutes after a specific event (for example, a penalty event) occurs.

Now, an operation of detecting a whistle event from the aforementioned audio data of the sports moving picture by the event detection unit 120 will be described. In general, a whistle has a large ZCR like a voice which is generated by a vibration of a vocal cord of a human. In the event detection unit 120, the ZCRs of the audio date of the shots are calculated by using Equation 2, and if the ZCRs are more than a specified value, it is determined that the whistle events occur in the associated shots.

[Equation 2]

$$Z_s(m) = \frac{1}{N} \sum_{n=m-N+1}^{m} \frac{|\operatorname{sgn}\{s(n)\} - \operatorname{sgn}\{s(n-1)\}|}{2} w(m-n)$$

Here, $Z_c$, w(m-n), s(n), and N denote a ZCR, a normalized window function of audio data, a size of n-th audio data, and the number of audio data samples.

Now, an operation of detecting a cheering event from the aforementioned audio data of the sports moving picture by the event detection unit 120 will be described. In the event detection unit 120, short time energy (STE) of the audio date of the shots are calculated by using Equation 3, and if the STE is more than a specified value, it is determined that the cheering event occurs in the associated shot.

[Equation 3]

$$E_s(m) = \sum_{n=m-N+1}^{m} \{s(n)w(m-n)\}^2$$

Here, $E_s$, w(m-n), s(n), and N denote an STE of audio data, a normalized window function of audio data, a size of n-th audio data, and the number of audio data samples.

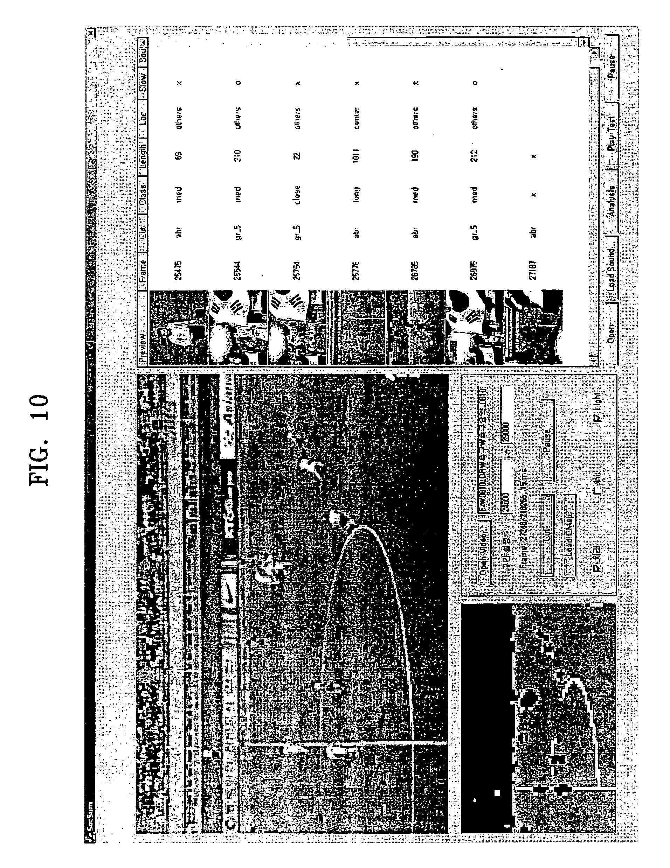

FIG. 10 is a view of a window showing a summarized sports moving picture obtained by the method of summarizing the sports moving picture according to the present invention.

In a method and apparatus for summarizing a sports moving picture according to the above-described embodiments of present invention, the sports moving picture are summarized by calculating levels of importance of shots in the sports moving picture based on extracted audio and image data and selecting important shots based on the calculated levels of importance, so that reliability of the summarized sports moving picture can increase and a user can generate a desired length of summarized sports moving picture.

The above-described embodiments of the present invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

Although a few embodiments of the present invention have been shown and described, the present invention is not limited to the described embodiments. Instead, it would be appreciated by those skilled in the art that changes may be made to these embodiments without departing from the principles of the invention, the scope of which is defined by the claims and their equivalents.

**Claims**

1.   A method of summarizing a sports moving picture, comprising:

segmenting the sports moving picture into shots and extracting audio and image data of the segmented shots;
calculating a level of importance for each of the shots based on the extracted audio and image data; and
selecting important shots among the shots based on the calculated levels of importance and summarizing the sports moving picture based on the calculated levels of importance.

2.   The method according to claim 1, wherein the calculating includes:

detecting events which occur in each of the shots based on the extracted audio and image data; and
calculating the level of importance of one of the shots based on the detected events of the shot.

**3.** The method according to claim 2, wherein on of the events is cheering, a whistle, an important area, or a display of a replay event.

**4.** The method according to claim 3, wherein an important area is a penalty area.

**5.** The method according to any of claims 2, 3, or 4, wherein one of the events is a cheering event detected from a shot when a short time energy of extracted audio data of the shot is more than a specified value.

**6.** The method according to any of claims 2 to 5, wherein one of the events is a whistle event detected from a shot when a zero crossing rate of extracted audio data of the shot is more than a specified value.

**7.** The method according to any of claims 2 to 6, wherein one of the events is a penalty area detected by:

extracting a long view from views of the shot;
extracting white regions from the extracted long view;
extracting straight-line regions from the extracted white regions; and
detecting the penalty area based on the extracted straight-line regions.

**8.** The method according to claim 7, wherein the step of extracting a long view includes extracting an image of which field color has an occupation ratio more than a specified value as the long view.

**9.** The method according to claim 7 or 8, wherein the step of extracting white regions includes extracting from the extracted long views a region of which brightness is more than a specified multiple of an average brightness of the extracted long view.

**10.** The method according to claim 7, 8, or 9, wherein the step of detecting the penalty area includes detecting the penalty area from the extracted straight-line regions based on slopes of the extracted straight lines

**11.** The method according to any of claims 3 to 10, wherein one of the events is a replay event detected when a zero crossing rate of a brightness difference between continuous images of the shot is more than a specified value.

**12.** The method according to any of claim 3 to 11, wherein one of the events is a replay event detected from the shots which follows in a specified time after a specified event occurs.

**13.** The method according to any of claims 2 to 12, wherein the level of importance of the shot is calculated based on weighting factors allocated to the detected events of the shot.

**14.** The method according to claim 13, wherein the weighting factors are allocated to the events by a user.

**15.** The method according to any preceding claim, wherein the important shots are selected so that a sum of playing times of the important shots is less than a predetermined value.

**16.** The method according to claim 1, further comprising the steps of:

detecting a field color from the sports moving picture; and
detecting audio events of the shots based on the extracted audio data and detecting visual events of the shots based on a detected field color and the extracted image data,

wherein calculating a level of importance for each of the shots is based on the detected audio and visual events.

**17.** The method according to claim 16, wherein the detecting includes:

obtaining color distributions of pixels of images of the sports moving picture for a specified time;
detecting a dominant color in which a largest number pixels are distributed based on the obtained color distributions; and

determining adjacent colors in a specified range at a center of the detected dominant color as the field color.

18. The method according to claim 17, wherein the color distributions are YUV distributions of the pixels of the images.

19. The method according to claim 16, 17, or 18, wherein the field color is updated at specified time.

20. The method according to claim 16, 17, or 18, wherein the field color is updated when a ratio of pixels having the field color to the entire pixels of the image of the sports moving picture is more than a specified value.

21. A computer program comprising computer program code means adapted to perform all the steps of any preceding claim when said program is run on a computer.

22. A computer program as claimed in claim 21 embodied on a computer readable program.

23. A sports moving picture summarizing apparatus comprising:

a data extraction unit arranged to segment the sports moving picture into shots and to extract audio and image data of the segmented shots;
an event detection unit arranged to detect events of the shots based on the extracted audio and image data;
a level-of-importance calculation unit arranged to calculate a level of importance for each of the shots based on the detected events of the shots; and
a summarizing unit arranged to select important shots of the shots based on the calculated levels of importance and summarize the sports moving picture based on the selected important shots.

24. The sports moving picture summarizing apparatus according to claim 23, wherein one of the events is cheering, a whistle, an important area, or a replay event.

25. The sports moving picture summarizing apparatus according to claim 24, wherein an important area is the penalty area.

26. The sports moving picture summarizing apparatus according to any of claims 23 to 25, wherein one of the events is a cheering event detected from a shot when a short time energy of extracted audio data of the shot is more than a specified value.

27. The apparatus of claim 26, wherein the STE satisfies the following equation:

$$E_s(m) = \sum_{n=m-N+1}^{m} \{s(n)w(m-n)\}^2$$

,

and
wherein $E_s$, $w(m-n)$, $s(n)$, and $N$ respectively denote an STE of audio data, a normalized window function of audio data, a size of n-th audio data, and a number of audio data samples.

28. The sports moving picture summarizing apparatus according to any of claims 23 to 27, wherein one of the events is a whistle detected from a shot when a zero crossing rate of extracted audio data of the shot is more than a specified value.

29. The apparatus of claim 28, wherein the zero crossing rate satisfies the following equation:

$$Z_s(m) = \frac{1}{N} \sum_{n=m-N+1}^{m} \frac{|\operatorname{sgn}\{s(n)\} - \operatorname{sgn}\{s(n-1)\}|}{2} w(m-n)$$

,

and

wherein $Z_c$, w(m-n), s(n),and N respectively denote a ZCR, a normalized window function of audio data, a size of n-th audio data, and the number of audio data samples.

30. The sports moving picture summarizing apparatus according to any of claims 23 to 29, wherein the event detection unit includes:

a long view extraction unit arranged to extract a long view from views of the shots;
a white region extraction unit arranged to extract white regions from the extracted long view;
a straight-line region extraction unit arranged to extract straight-line regions from the extracted white regions; and
a penalty area detection unit arranged to detect a penalty area based on the extracted straight-line regions.

31. The sports moving picture summarizing apparatus according to any of claims 23 to 30, wherein one of the events is a replay event detected when a zero crossing rate of a brightness difference between continuous images of the extracted shots is more than a specified value.

32. The apparatus of claim 31, wherein the zero crossing rate satisfies the following equations:

$$Z_c(t,\ \theta_k) = \sum_{i=1}^{L-1} f\left(D(t-i) - \bar{D}(t),\ D(t-i-1) - \bar{D}(t),\ \theta_k\right)$$

$$f(x,\ y,\ \theta) = \begin{cases} 1 & x \geq \theta\ and\ y \leq -\theta\ or \\ & x \leq -\theta\ and\ y \geq \theta \\ 0 & otherwise \end{cases}$$

,

and

wherein $Z_c$, t, θ, L, D, and f respectively denote a ZCR, a time, a specified threshold value, a length of a normalized window of each of the images, an intensity difference between the images, and a number of repeating images.

33. The sports moving picture summarizing apparatus according to any of claims 23 to 32, wherein one of the events is a replay event detected from shots which follow in a specified time after a specified event occurs.

34. The sports moving picture summarizing apparatus according to any of claims 23 to 33, wherein the level-of-importance calculation unit calculates the levels of importance of the shots based on weighting factors allocated to the detected events of the shots.

35. The sports moving picture summarizing apparatus according to claim 34, wherein the weighting factors are allocated to the events by a user.

36. The sports moving picture summarizing apparatus according to any of claims 23 to 35, wherein the important shots are selected so that a sum of playing times of the important shots is shorter than a summarizing time input by a user.

37. The sports moving picture summarizing apparatus according to any of claims 23 to 36, further comprising a field color detection unit detecting a field color from the sports moving picture.

38. The sports moving picture summarizing apparatus according to claim 37, wherein the field color detection unit includes:

a color distribution calculation unit arranged to obtain color distributions of pixels of images of the sports moving picture for a specified time;
a dominant color detection unit arranged to detect a dominant color in which a largest number of pixels are distributed based on the obtained color distributions; and
a field color determination unit arranged to determine adjacent colors in a specified range at a center of the detected dominant color as the field color.

**39.** The sports moving picture summarizing apparatus according to claim 38, wherein the color distributions are YUV distributions of the pixels of the image.

**40.** The sports moving picture summarizing apparatus according to any of claims 37 to 39, wherein the field color is updated at specified intervals of time.

**41.** The sports moving picture summarizing apparatus according to any of claims 37 to 39, wherein the field color is updated when a ratio of pixels having the field color to the entire pixels of the image of the sports moving picture is more than a specified value.

**42.** The sports moving picture summarizing apparatus according to any of claims 23 to 41, wherein the summarizer selects at least one of the shots based on the calculated levels and summarizes the moving picture based on the at least one selected shot.

FIG. 1

```
MOVING
PICTURE ──┬──→ ┌─────────────┐     ┌──────────┐     ┌──────────────────┐     ┌────────────┐
          │    │   DATA      │     │  EVENT   │     │ LEVEL-OF-        │     │            │
          │    │ EXTRACTION  │────→│DETECTION │────→│ IMPORTANCE       │────→│ SUMMARIZING│
          │    │   UNIT      │     │  UNIT    │     │ CALCULATION UNIT │     │   UNIT     │
          │    └─────────────┘     └──────────┘     └──────────────────┘     └────────────┘
          │      110                 120              130                      140
          │
          │    ┌─────────────┐
          └──→ │ FIELD COLOR │
               │ DETECTION   │──────────┘
               │   UNIT      │
               └─────────────┘
                 100
```

FIG. 2

```
                    100

MOVING      ┌──────────────┐     ┌──────────────┐     ┌──────────────┐     TO EVENT
PICTURE ───→│ DISTRIBUTION │────→│  DOMINANT    │────→│ FIELD COLOR  │───→ DETECTION
            │ CALCULATION  │     │   COLOR      │     │DETERMINATION │     UNIT
            │    UNIT      │     │DETECTION UNIT│     │    UNIT      │
            └──────────────┘     └──────────────┘     └──────────────┘
              200                  210                  220
```

## FIG. 3A

## FIG. 3B

## FIG. 3C

FIG. 4

DOMINANT COLOR

FIG. 5A

FIG. 5C

FIG. 5B

FIG. 5D

FIG. 6

| 600 | 610 | 620 | 630 |
|---|---|---|---|
| LONG VIEW EXTRACTION UNIT | WHITE REGION EXTRACTION UNIT | STRAIGHT-LINE REGION EXTRACTION UNIT | PENALTY AREA EXTRACTION UNIT |

FIG. 7E

FIG. 7F

FIG. 7C

FIG. 7D

FIG. 7A

FIG. 7B

FIG. 8A

FIG. 8B

# FIG. 9A

# FIG. 9B

EP 1 659 519 A2

FIG. 10

EP 1 659 519 A2

# FIG. 11

START

DETECT FIELD COLOR —1100

SEGMENT MOVING PICTURE
INTO SHOTS —1110

EXTRACT AUDIO DATA
AND IMAGE DATA OF SHOTS —1120

DETECT EVENTS OF SHOTS —1130

CALCULATE LEVELS OF
IMPORTANCE OF SHOTS —1140

SELECT IMPORTANT SHOTS
BASED ON LEVELS
OF IMPORTANCE —1150

SUMMARIZE MOVING PICTURE
BY USING IMPORTANT SHOTS —1160

END

## FIG. 12

START

OBTAIN PIXEL COLOR DISTRIBUTION
IMAGES FOR t SECONDS — 1200

DETECT DOMINANT COLOR — 1210

DETERMINE ADJACENT COLORS OF
DOMINANT COLOR AS FIELD COLOR — 1220

END

## FIG. 13

START

EXTRACT LONG VIEW — 1300

EXTRACT WHITE REGION — 1310

EXTRACT STRAIGHT-LINE REGION — 1320

EXTRACT PENALTY AREA — 1330

END